(19) Europäisches Patentamt

European Patent Office

Office européen des brevets

(11) Veröffentlichungsnummer: **0 398 095 B1**

(12) **EUROPÄISCHE PATENTSCHRIFT**

(45) Veröffentlichungstag der Patentschrift: **03.08.94**

(21) Anmeldenummer: **90108481.4**

(22) Anmeldetag: **05.05.90**

(51) Int. Cl.5: **C07F 9/09**

---

(54) **Verfahren zur Herstellung von Phosphorsäure-tris(2-chlor(iso)-propyl)estern.**

---

(30) Priorität: **19.05.89 DE 3916272**

(43) Veröffentlichungstag der Anmeldung:
**22.11.90 Patentblatt 90/47**

(45) Bekanntmachung des Hinweises auf die
Patenterteilung:
**03.08.94 Patentblatt 94/31**

(84) Benannte Vertragsstaaten:
**CH DE FR GB IT LI**

(56) Entgegenhaltungen:
**DE-A- 2 338 138**
**DE-B- 1 290 532**

(73) Patentinhaber: **BAYER AG**

**D-51368 Leverkusen(DE)**

(72) Erfinder: **Block, Hans-Dieter, Dr.**
**Biesenbach 49**
**D-5090 Leverkusen 3(DE)**
Erfinder: **Roth, Wilfried**
**Repinghofener Strasse 21**
**D-5093 Burscheid(DE)**

EP 0 398 095 B1

**Beschreibung**

Die vorliegende Erfindung betrifft ein Verfahren zur Herstellung von Phosphorsäure-tris(2-chlor-(iso)-propyl)estern, also einem Gemisch von Tri-Estern der Phosphorsäure mit 2-Chlorpropanol-1 und 1-Chlorpropanol-2 aus Phosphoroxychlorid und Propylenoxid.

Phosphorsäure-tris(2-chlor(iso)propylester), häufig als TCPP abgekürzt und auch im weiteren hier als TCPP bezeichnet, ist ein wertvolles und häufig eingesetztes Flammschutzmittel für Polymere, z.B. für Polyurethan- und Polyisocyanurat-Schäume. Aus diesem Grunde sind auch verschiedene Maßnahmen erarbeitet und vorgeschlagen worden, seine Synthese aus Phosphoroxychlorid und Propylenoxid zu verbessern.

Nach GB-PS 701 794 werden Phosphorsäure-tris(2-chloralkyl)ester durch Umsetzung von Phosphoroxychlorid mit Alkylenoxiden bei Temperaturen zwischen 20°C und 100°C in Gegenwart von Titan- oder Zirkonhalogeniden erhalten, wobei die Zirkon- und Titanhalogenide im Gegensatz zu den zuvor verwendeten Katalysatoren erstmals eine sichere Syntheseführung erlaubten. Farbhelle und ausreichend reine Präparate konnten nach der angegebenen Verfahrensweise allerdings nur durch Destillation der Rohprodukte unter technisch kaum realisierbaren Laborbedingungen im Hochvakuum erhalten werden.

Dieser Nachteil bleibt auch bestehen, wenn man die Arbeitsweise der GB-PS 985 752 verwendet und präformierte Titanester als recyclisierbare Katalysatoren verwendet.

Ein in der US-PS 3 100 220 vorgeschlagenes Katalysatorsystem, eine Mischung aus Titantetrachlorid und Phosphortrichlorid, soll gegenüber Titantetrachlorid allein eine überragende Aktivität aufweisen und wesentlich kürzere Reaktionszeiten ermöglichen. Die besten Ergebnisse lassen sich mit diesem Katalysatorsystem bei 55°C bis 65°C, also bei etwa 60°C erzielen; nichtsdestoweniger wird für Tris-(2-chlor(iso)-propyl)phosphat nach langer Reaktionsdauer noch eine Nachreaktionszeit von einer Stunde benötigt. Darüberhinaus ist bekannt geworden, daß aus Phosphortrichlorid gebildete Phosphorigsäuretrialkylester, hier Phosphorigsäure-tris-(2-chlorpropyl)ester, gegen Hydrolyse sehr empfindlich sind; damit wird die Stabilität des Produktes negativ beeinflußt.

Auch die in der GB-A 1 160 951 angegebene Arbeitsweise benötigt für die Umsetzung von Phosphoroxychlorid mit Propylenoxid bei 50°C vier Stunden und noch eine weitere Nachreaktionszeit von einer Stunde bei 55°C, wobei Titantetrachlorid als Katalysator fungiert.

A.N. Pudovik, E.M. Faizullin und G.I. Zuravlev (Zh. obshch. Khim. 36, (1966) Nr. 8, S. 1454-1459) beschreiben die Umsetzung von Phosphoroxychlorid mit Propylenoxid zu Phosphorsäure-tris(2-chlor(iso)-propyl)ester bei 40-90°C in Gegenwart von Wasser oder Salzsäure, wobei bei 40-90°C Reaktionstemperatur zwischen 4 und 7 Stunden Reaktionszeit oder bei Zimmertemperatur 4 bis 6 Tage Reaktionszeit benötigt werden.

US-PS 3 557 260 verwendet als Katalysator für die Reaktion von Phosphoroxychlorid und Propylenoxid eine Kombination der vorstehend beschriebenen Systeme, nämlich Titan in Form der Sulfate in Gemeinschaft mit Wasser. Dabei ergeben sich allerdings immer noch mehrstündige Reaktionszeiten, selbst wenn bei 90°C und darüber gearbeitet wird.

Die DE-AS 1 290 532 beschreibt ein Verfahren, welches durch eine kontinuierliche Arbeitsweise das zuvor nur schwer lösbare Problem der Wärmeabfuhr bei der Synthese der Phosphorsäure-tris-2-chloralkylester bequem zu lösen gestattet. Allerdings bedarf auch dieses Verfahren der DE-AS 1 290 532 noch wenigstens 10 %iger Überschüsse an Alkylenoxid, hier Propylenoxid. Darüber hinaus betragen die Reaktionszeiten, die für die Umsetzung zu einem brauchbaren Produkt benötigt werden, zwischen zwei und zwanzig Stunden, in dem angeführten Beispiel sind es 13,5 Stunden für TCPP; bevorzugt für die Herstellung eines qualitativ besonders guten Produktes sind zwischen 5 und 10 Stunden Verweildauer im Reaktor.

Keines der Verfahren nach dem Stand der Technik ist also in der Lage, Tris-(2-chlor(iso)propyl)-phosphat aus Phosphoroxychlorid und Propylenoxid in einer für die Technik erstrebenswerten kurzen Reaktionszeit von weniger als zwei Stunden zu erzeugen, insbesondere auch nicht unter Beachtung der Randbedingungen einer kontinuierlichen Reaktionsführung bei sparsamem Einsatz der Ausgangsmaterialien und der Forderung, ein qualitativ hochwertiges Endprodukt zu erzeugen.

Der vorliegenden Erfindung lag daher die Aufgabe zugrunde, ein kontinuierliches Verfahren zur Herstellung von Tris(2-chlor(iso)propyl)phosphat aus Phosphoroxychlorid und Propylenoxid zur Verfügung zu stellen, welches ein qualitativ hochwertiges Tris-(2-chlor(iso)propyl)phosphat in kurzer Reaktionszeit von weniger als zwei Stunden bei sparsamem Einsatz der Ausgangsmaterialien erzeugt.

Diese Aufgabe wird erfindungsgemäß dadurch gelöst, daß Phosphoroxychlorid und Propylenoxid im Molverhältnis 1:3,09 bis 3,50, vorzugsweise bis 3,25 in Gegenwart von $1,7 \times 10^{-3}$ bis $2,8 \times 10^{-3}$ mol Titantetrachlorid pro mol Phosphoroxychlorid bei Reaktionstemperaturen von ca. 80°C bis ca. 95°C umgesetzt werden.

Da nachgewiesen ist (DDR-Patentschrift 125 035, S. 4, Zeile 14-23), daß sich als Katalysator zugesetztes Titantetrachlorid in der Reaktionsmischung umsetzt und somit wahrscheinlich eines oder mehrere dieser Folgeprodukte die eigentlich katalytisch wirksame Spezies darstellen, können gleichwertig an Stelle des Titantetrachlorids auch dessen Umsetzungsprodukte mit den gleichzeitig in der Reaktionsmischung vorhandenen Stoffen Phosphoroxychlorid, Propylenoxid und Tris-(2-chlor(iso)propyl)phosphat in äquivalenter Menge eingesetzt werden.

Die Lösung der gestellten Aufgabe auf diesem Weg ist schon insofern überraschend, als die bisher herrschende Lehre vor Reaktionstemperaturen über 80 ° C warnte, so z.B. DDR-Patentschrift 125 035 (S. 1, Zeile 24; S. 3, Zeile 28 ff) mit dem Hinweis auf oberhalb 80 ° C auftretende Nebenraktionen und US-PS 3 557 206 (Spalte 1, Zeile 39 ff). Deshalb ist auch bisher ein tiefer liegender Temperaturbereich bevorzugt worden, worauf US-PS 3 100 220 (Spalte 1, Zeile 54, 55) deutlich hinweist.

Die für das erfindungsgemäße Verfahren einzusetzende Menge Katalysator Titantetrachlorid unterscheiden sich dabei nicht wesentlich von jenen Mengen, die schon bisher für diese Reaktion empfohlen worden sind; sie liegen sogar mit 0,22 bis 0,34 Gew.-%, bezogen auf eingesetztes Phoshoroxychlorid, entsprechend $1,8 \cdot 10^{-3}$ bis $2,8 \cdot 10^{-3}$ mol Titantetrachlorid pro mol Phosphoroxychlorid am unteren Ende der früher empfohlenen Katalysatorkonzentrationen.

Für die diskontinuierliche Umsetzung von Phosphoroxychlorid mit Alkylenoxiden, so also auch mit Propylenoxid, durch Zugabe des Alkylenoxids zu vorgelegtem Phosphoroxychlorid sind schwankende Angaben zum erforderlichen Überschuß an Alkylenoxid gemacht worden, es wurde zumeist ein kleiner Überschuß für ausreichend gehalten.

In der DE-AS 1 290 532 ist ein Überschuß an Propylenoxid gegenüber der theoretisch erforderlichen Menge von 50 % in das kontinuierliche Verfahren eingesetzt worden, das sind 4,5 mol Propylenoxid pro 1 mol Phosphoroxychlorid. Auch wenn dieser Überschuß an Propylenoxid wieder gasförmig aus der Reaktionsmischung ausgetrieben und an anderer Stelle wieder kondensiert werden kann, ist die Kreislaufführung eines derart großen Propylenoxid-Überschusses energieintensiv und unwirtschaftlich.

Das erfindungsgemäße Verfahren kommt dagegen bei kontinuierlicher Fahrweise mit 3,09 mol Propylenoxid pro mol Phosphoroxychlorid, also mit ca. 3 % Propylenoxid-Überschuß aus. Dies ist umso erstaunlicher als unter sonst gleichartigen Bedingungen bei diskontinuierlicher Umsetzung ein höherer Propylenoxid-Überschuß benötigt wird, um ein vergleichbar hochwertiges Produkt zu erhalten.

Wie in den nachfolgenden Beispielen näher belegt wird, erweisen sich unter den Bedingungen des erfindungsgemäßen Verfahrens Verweilzeiten zwischen 0,5 und 1,6 Stunden als ausreichend, ein qualitativ hochwertiges, also farbhelles und säurearmes Produkt Tris(2-chlor(iso)propyl)phosphat zu erzeugen.

Die Umsetzung von Phosphoroxychlorid und Propylenoxid nach dem erfindungsgemäßen Verfahren kann sowohl in einem einzelnen gerührten oder ungepumpten Reaktor wie auch in einer Kaskade aus hintereinandergeschalteten Reaktoren wie auch in einem geeignet ausgebildeten Reaktor mit Gegenstromführung der Reaktionskomponenten erfolgen. Die letztgenannte Arbeitsweise ist in der DE-AS 1 290 532 dargestellt. Wird in einem gerührten oder ungepumpten Reaktor gearbeitet, müssen die Vorrichtung zur Abfuhr der Reaktionswärme ausreichend groß dimensioniert sein. Vorzugsweise bildet der Wärmeaustauscher selbst den Reaktor oder einen wesentlichen Teil desselben. Werden zwei oder mehr Reaktoren hintereinandergeschaltet, kann die Vorrichtung zur Wärmeabfuhr aus den nachgeschalteten Reaktoren bei vergleichbar großer Verweilzeit deutlich kleiner gestaltet werden. Selbstverständlich ist es auch möglich, in einem ersten Reaktor nur eine teilweise Umsetzung herbeizuführen, indem beispielsweise nur eine unzureichende Menge Propylenoxid eindosiert wird, und anschließend die weitere Umsetzung in dem nachfolgenden Reaktor bzw. in den nachfolgenden Reaktoren durch Nachdosieren der Unterschußkomponente zu bewirken, jedoch sind in dieser Arbeitsweise keine besonderen Vorteile zu erkennen.

Das den Reaktionsteil verlassende rohe TCPP kann vor der weiteren Aufarbeitung durch Anlegen eines Vakuums von Leichtsiedern, wobei es sich im wesentlichen um nicht verbrauchtes Propylenoxid handelt, befreit werden. Wenn auch dieser Schritt die nachfolgende Aufarbeitung und Reinigung des Produktes erleichtert, so ist er dennoch nicht unbedingt nötig, da auch die nachfolgenden Waschstufen zu einer Zerstörung des Propylenoxids durch Hydrolyse und Acidolyse und zu dessen Entfernung aus der Produktphase führen.

Die Aufarbeitung des rohen Tris-(2-chlor(iso)propylphosphats erfolgt in der Reihenfolge, daß zunächst mit Lösungen starker Mineralsäuren, danach mit wäßriger Alkalimetallhydroxid-Lösung und abschließend mit Wasser gewaschen wird, sodann das gewaschene Produkt einer Wasserdampfdestillation unterworfen und zum Schluß getrocknet wird.

Die Wäsche mit Mineralsäure-Lösung dient dem Zwecke, gelöste Titan(IV)-Verbindungen aus dem Produkt herauszulösen, wie schon in der DE-OS 2 302 843 für andere 2-Chloralkylphosphate ausgeführt.

3

Bevorzugt dafür eingesetzte Mineralsäuren sind Salzsäure und Schwefelsäure oder eine Kombination derselben in der zeitlichen Reihenfolge Schwefelsäure und danach Salzsäure. In der wäßrigen Phase beträgt die Säurekonzentration zwischen ca. 1 mol $H^+$/l und 6 mol $H^+$/l, vorzugsweise zwischen ca. 3 mol$H^+$/l und 5,5 mol $H^+$/l. Wenn mit Säurekonzentrationen im unteren Bereich gearbeitet werden soll, muß die Säurewäsche wenigstens zweistufig, gegebenenfalls mehrstufig ausgeführt werden.

Vor dem Übergang auf die alkalische Wäsche kann gewünschtenfalls mit Wasser gewaschen werden, um den größeren Teil der im Produkt gelösten Säure auszuwaschen.

Sowohl die Wäsche mit mineralsauren Lösungen wie gegebenenfalls mit Wasser erfolgen unabhängig voneinander bei Temperaturen zwischen 15°C und ca. 100°C, bevorzugt allerdings bei Temperaturen oberhalb 35°, besonders bevorzugt bei Temperaturen von ca. 60°C bis ca. 90°C.

Für die alkalische Wäsche eignen sich verdünnte Alkalimetallhydroxid-Lösungen, Erdalkalimetallhydroxid-Lösungen und alkalisch reagierende Salze der Alkalimetalle, z.B. Alkalimetallcarbonate in Lösung, grundsätzlich sind auch Amin-Lösungen einsetzbar. Bevorzugt wird Natronlauge eingesetzt. Die Konzentration des gelösten Alkalimetall- bzw. Erdalkalimetallhydroxids beträgt vorteilhafterweise zwischen 0,05 und 1,0 mol/l.

Alkalimetallsalz-Lösungen können in höherer Konzentration bis zur Löslichkeitsgrenze eingesetzt werden, die Abtrennung der wäßrigen Phase vom Produkt wird jedoch erleichtert durch Beschränkung auf Konzentrationen unter 2,0 mol/l.

Für die alkalische Wäsche werden tiefere Temperaturen als für die Wäsche mit Säure bevorzugt, geeignet sind 15°C bis 80°C für Lösungen der Hydroxide, Lösungen der Carbonate werden bis ca. 90°C eingesetzt.

Der Wäsche mit der wäßrigen Alkalimetallhydroxid-Lösung schließt sich eine Wasserwäsche an, um Reste Alkali und Alkalimetallsalze saurer Nebenprodukte und wasserlösliche Neutralstoffe zu entfernen. Das Auswaschen des gelösten Alkalis findet bei 15°C bis 100°C statt, bevorzugt oberhalb 35°, besonders bevorzugt bei ca. 60°C bis ca. 90°C.

Der Gesamtprozeß der vorgenannten Waschstufen erfolgt kontinuierlich entweder in einer Gegenstrom-Waschsäule, wobei das Produkt von oben zugegeben wird und im Gegenstrom durch die einzelnen Waschmedien, die nach unten abgestuft von der Seite eingebracht werden, geführt wird oder aber in einer Kaskade von Mixer-Settlern, wobei die einzelnen Waschschritte in beiden Verfahren auch jeweils mehrstufig ausgeführt sein können. Solche Waschverfahren sind in der DE-OS 2 338 138 beschrieben.

Das Phasenverhältnis von organischer Produktphase zu wäßriger Waschphase beträgt in den vorgenannten Waschschritten jeweils zwischen 10:1 und 1:10, vorzugsweise jedoch zwischen 3:1 und 1:2.

Das gewaschene, nunmmehr von Titan und sauren Verunreinigungen befreite Tris(2-chlor(iso)propyl)-phosphat wird zur Entfernung geruchsintensiver oder zur Verfärbung neigender organischer Begleitstoffe, soweit sie bei der vorangehenden Wäsche noch nicht entfernt wurden, einer Wasserdampfdestillation unterworfen. Vorzugsweise werden dabei das Produkt TCPP und der Wasserdampf im Gegenstrom zueinander geführt, indem beispielsweise das TCPP oben auf eine mit Füllkörpern oder durchlässigen Boden versehene Kolonne aufgegeben wird und von unten Wasserdampf eingeblasen wird. Das unten austretende gereinigte Produkt wird, gegebenenfalls nach Abtrennung mitgeführten Wasserdampf-Kondensats, einer raschen und schonenden Trocknung zugeführt, wobei das Wasser bis auf Restgehalte unter 0,2 %, vorzugsweise unter 0,05 %, entfernt wird.

Das erfindungsgemäße Verfahren soll anhand der folgenden Beispiele noch näher erläutert werden (%-Angaben bedeuten Gew.-%).

Beispiele

Alle Versuche wurden in einer aus drei gerührten und temperierten Reaktoren bestehenden Versuchsapparatur durchgeführt. Die Reaktoren sind mit gelochten Flügelrührern und mit Edelstahl-Wärmeaustauscher-Schlangen ausgerüstet. Das Arbeitsvolumen eines jeden Reaktors beträgt 380 ml.

Phosphoroxychlorid, dem der Katalysator Titantetrachlorid bereits beigemischt ist, sowie auch Propylenoxid werden mit Telab-Pumpen FB 411 in den 1. Reaktor gefördert. Eine Bestimmung der geförderten Mengen erfolgt vor Versuchsbeginn durch Wägung und während des Versuches durch Volumenmessung zwischen Pumpe und Reaktor.

Die Temperatur im 1. Reaktor wird dadurch gehalten, daß durch die einliegende Edelstahl-Schlange mit konstanter Geschwindigkeit temperiertes Wasser gepumpt wird; die aufgenommene Wärme wird im Thermostaten abgeführt. Die Edelstahl-Schlangen des zweiten und des dritten Reaktors werden ebenfalls mit temperiertem Wasser beschicht, nur muß hier wegen der vernachlässigbar geringen Reaktionswärme und wegen hoher Abstrahlung geheizt werden.

4

Die in den angeführten Beispielen ermittelten Säuregehalte wurden in der Weise ermittelt, daß jeweils 10 ml Produkt mit 100 ml Wasser während 15 Minuten intensiv vermischt wurden und sodann der Säuregehalt der wäßrigen Phase durch Titration mit 0,1 n Natronlauge bestimmt wurde.

**Beispiele 1-5:**

Die nachfolgend tabellarisch zusammengestellten Ergebnisse der Beispiele 1-5 wurden erhalten in der voranstehend beschriebenen Apparatur, wobei die mittlere Verweilzeit auf 45 Minuten pro Reaktor eingestellt wurden. Der Einsatz an Katalysaator betrug 0,0023 mol Titantetrachlorid pro 1 mol Phosphoroxychlorid, aufgelöst in dem letzteren.

| Bei-spiel Nr. | Molververhältnis Propylenoxid: Phosphoroxy-chlorid | Reaktor 1 Reakt.- Temp. | Reaktor 2 Reakt.- Temp. | Säurege-halt mmol $H^+$/l | Reaktor 3 Reakt.- Temp. | Säure-gehalt | Farbe |
|---|---|---|---|---|---|---|---|
| 1 | 3,09 | 80° C | 80° C | 7 mmol/l | 80° C | 7 mmol/l | schwach gelblich |
| 2 | 3,09 | 90° C | 90° C | 6 mmol/l | 90° C | 6 mmol/l | schwach gelblich |
| 3 | 3,09 | 100° C | 94° C | 6 mmol/l | 94° C | 5 mmol/l | stark gelb |
| 4 | 3,17 | 80° C | 80° C | 8 mmol/l | 80° C | 5 mmol/l | schwach gelblich |
| 5 | 3,17 | 70° C schwankend! | 73° C | 4 mmol/l | 73° C | 5 mmol/l | schwach gelblich |

Aus den aufgeführten Vergleichsbeispielen 3 und 5 ist ersichtlich, daß eine deutlich über den Temperaturbereich von 80 bis 90 °C hinausgehende Reaktionstemperatur zu stärker verfärbten Produkten führt, während eine tiefere Temperatur wie in Vergleichsbeispiel 5, in welchem 70 °C als Reaktionstemperatur angestrebt war, eine zwischen ca. 60 °C und ca. 95 °C schwankende Innentemperatur im ersten Reaktor zur Folge hat. Somit ist im letzteren Fall eine sichere Verfahrensführung nicht mehr gewährleistet.

Beispiele 6-12:

Die nachfolgend tabellarisch zusammengestellten Ergebnisse der Beispiele 6-12 werden erhalten, wenn in der oben beschriebenen Apparatur in allen drei Reaktoren eine Temperatur von 80° C aufrechterhalten wird und dem Phosphoroxychlorid 0,023 mol Titantetrachlorid pro 1 mol Phosphoroxychlorid beigefügt sind. Die mittlere Verweilzeit pro Reaktor beträgt dabei 40-45 Minuten.

| Beispiele Nr. | Molverhältnis Propylenoxid: Phosphoroxychlorid | Reaktor 2 Säuregehalt mmol $H^+$/l | Reaktor 3 Säuregehalt mmol $H^+$/l | Farbe |
|---|---|---|---|---|
| 6 | 3,34 | 6 mmol/l | 5 mmol/l | schwach gelblich |
| 7 | 3,25 | 5 mmol/l | 6 mmol/l | " " |
| 8 | 3,17 | 5 mmol/l | 6 mmol/l | " " |
| 9 | 3,17 | 8 mmol/l | 5 mmol/l | " " |
| 10 | 3,08 | 7 mmol/l | 7 mmol/l | gelblich |
| 11 | 3,00 | 140 mmol/l | 75 mmol/l | gelb |
| 12 | 3,00 | n.b. | 86 mmol/l | gelb |

Die Ergebnisse der Vergleichsbeispiele 10, 11 und 12 zeigen, daß auch beim Arbeiten im bevorzugten Temperaturbereich ein farblich befriedigendes Rohprodukt nur erhalten werden kann, wen ein Propylenoxid : Phosphoroxychlorid-Molverhältnis von 3,08 überschritten wird. Vergleichsbeispiel 6 belegt, daß eine weitere Erhöhung dieses Molverhältnisses keinen Einfluß in Richtung auf eine Farbaufhellung und eine Minderung des Restsäuregehaltes mehr hat.

Beispiele 13-18:

Die nachfolgend tabellarisch zusammengestellten Ergebnisse der Beispiele 13-18 werden erhalten, wenn in der oben beschriebenen Apparatur in allen drei Reaktoren eine Temperatur von 80°C aufrechterhalten wird und dem Phosphoroxychlorid 0,023 mol Titantetrachlorid pro 1 mol Phosphoroxychlorid beigefügt sind. In allen Fällen wurde ein farbhelles Produkte erhalten.

| Beispiel-Nr. | Molverhältnis Propylenoxid: Phosphoroxychlorid | Reaktor 1 Säuregehalt | Reaktor 2 Säuregehalt | Reaktor 3 Säuregehalt | Mittlere Verweilzeit pro Reaktor |
|---|---|---|---|---|---|
| 13 | 3,09 | 160 mmol/l | 7 mmol/l | 5 mmol/l | 44 Minuten |
| 14 | 3,09 | 135 mmol/l | 6 mmol/l | 6 mmol/l | 22 Minuten |
| 15 | 3,09 | (100 mmol/l) | 4 mmol/l | 5 mmol/l | 17 Minuten |
| 16 | 3,09 | 7,5 mmol/l | 1 mmol/l | 1 mmol/l | 88 Minuten |
| 17 | 3,34 | 5 mmol/l | 1 mmol/l | 1 mmol/l | 80 Minuten |
| 18 | 3,34 | 9 mmol/l | 1 mmol/l | 1 mmol/l | 60 Minuten |

Die Beispiele 13-15 belegen, daß mit Verweilzeiten von zusammengenommen 34 Minuten bis 88 Minuten bereits in einer aus zwei Verweilgefäßen bestehenden Vorrichtung unter den angegebenen Bedingungen ein säurearmes und farbhelles Produkt erhalten werden kann. Darüber hinaus zeigt Beispiel 16, daß in einer aus nur einem Verweilgefäß bestehenden Apparatur ein qualitativ hochwertiges Produkt nach kurzer Verweilzeit erzeugt wird.

Aus den Vergleichsbeispielen 17 und 18 ergibt sich, daß auch bei höheren Propylenoxid-Überschüssen bei vergleichbarer Verweilzeit in einer Ein-Reaktor-Apparatur ein qualitativ wesentlich verbessertes Produkt nicht resultiert.

**Vergleichsbeispiele 19-22:**

Propylenoxid in den angegebenen Mengen wurde zu vorgelegtem Phosphoroxychlorid (1,0 mol), das 0,023 mol Titantetrachlorid gelöst enthielt, hinzugetropft. Dabei wurde die Temperatur der Reaktionsmischung auf 80-90°C durch Kühlung gehalten. Nach Zugabe des Propylenoxids innerhalb 25 Minuten wurde nach 10 Minuten auf Reaktionstemperatur gehalten.

| Beispiel-Nr. | Molverhältnis Propylenoxid : Phoshporoxychlorid | Säuregehalt | Farbe |
|---|---|---|---|
| 19 | 3,00 | 580 | gelb |
| 20 | 3,09 | 478 | gelb |
| 21 | 3,17 | n.b. | gelb |
| 22 | 3,34 | 75 | schwach gelblich |

An diesen Beispielen wird ersichtlich, daß bei ansatzweiser Umsetzung von Phosphoroxychlorid und Propylenoxid zur Gewinnung eines farbhellen und nur wenig Säure enthaltenden Produktes ein mindestens 10 %iger Überschuß an Propylenoxid erforderlich ist.

Beispiel 23

1 kg TCPP-Rohprodukt, hergestellt nach der Verfahrensweise von Beispiel 16, werden wie folgt aufbereitet:

Unter Rühren und im Vakuum wird das Produkt in einem Glaskolben im siedenden Wasserbad erwärmt, bis nach 30 min bei 95°C ein Vakuum von 25 mbar erreicht ist. Nach Belüften des Gefäßes werden 0,75 l wäßrige Salzsäure mit einem Gehalt von 4,8 mol/HCl/l, vorgewärmt auf ca. 50°C, hinzugefügt und bei fortgesetztem Erwärmen der Mischung wird 4 min durchgerührt und danach die Mischung zwecks Phasentrennung in einen Scheidetrichter überführt. Die abgetrennte, noch c. 80°C heiße organische Phase wird 3 Minuten mit 300 ml heißen Wasser durchgeführt und nach Phasentrennung wieder von der wäßrigen Phase abgetrennt. Die derarzt vorbereitete organische Phase wird nach dem Abkühlen auf 70°C mit 0,7 l 0,2 n Natronlauge versetzt, wobei die Temperatur der Mischung auf 60-70°C gehalten wird und ca. 5 Minuten durch Rühren gut durchgemischt wird. Die Phasentrennung erfolgt bei 60°C, im Anschluß wird die organische Phase noch zweimal bei 70°C mit je 1 l Wasser durchmischt und gewaschen. Die abgetrennte organische Phase wird in einem Kolben auf 120°C erhitzt und sodann wird ca. 20 Minuten lang ein auf ca. 120°C überhitzter Wasserdampf hindurchgeleitet. Aus dem Rückstand werden Reste Wasser durch Evakuieren bei 110°C auf 20 mbar abgezogen. Die Ausbeute beträgt 961 g Tris-(2-chlor(iso)propyl)-phosphat, das Material ist wasserklar, säurefrei und geruchlos.

## Patentansprüche

1. Verfahren zur Herstellung von Phosphorsäure-tris(2-chlor(iso)propyl)ester durch Umsetzung von Phosphoroxychlorid und Propylenoxid in dem Endprodukt als Lösungsmittel, dadurch gekennzeichnet, daß Phosphoroxychlorid und Propylenoxid im Molverhältnis 1,00:3,09 bis 3,50 bei 80-95°C, vorzugsweise bei 80-90°C in Gegenwart von 1,7 bis $2,8 \times 10^{-3}$ mol Titantetrachlorid pro Mol $POCl_3$ kontinuierlich umgesetzt werden und die anschließende Aufarbeitung durch aufeinanderfolgende Behandlung mit Säure, gegebenenfalls Wasser, mit Alkali, Wasserwäsche, gegebenenfalls Wasserdampfdestillation und Trocknung erfolgt.

## Claims

1. A process for the production of phosphoric acid tris(2-chloro(iso)propyl)ester by reaction of phosphorus oxychloride and propylene oxide in the end product as solvent, characterized in that phosphorus oxychloride and propylene oxide are continuously reacted in a molar ratio of 1.00:3.09 to 3.50 at 80 to 95°C and preferably at 80 to 90°C in the presence of 1.7 to $2.8 \times 10^{-3}$ mol of titanium tetrachloride per mol of $POCl_3$ and the reaction mixture is subsequently worked up by successive treatment with acid, optionally water and alkali, washing with water, optionally steam distillation and drying.

## Revendications

1. Procédé de production d'esters de tris-(2-chlor(iso)propyle) d'acide phosphorique par réaction d'oxychlorure de phosphore et d'oxyde de propylène dans le produit final tenant lieu de solvant, caractérisé en ce gu'on fait réagir en continu l'oxychlorure de phosphore et l'oxyde de propylène dans un rapport molaire de 1,00:3,09 à 3,50 à 80-95°C, de préférence à 80-90°C en présence de 1,7 à $28 \times 10^{-3}$ moles de tétrachlorure de titane par mole de $POCl_3$, puis on soumet le produit à des opérations successives de traitement avec un acide, éventuellement de l'eau, avec un alcali, de lavage à l'eau, le cas échéant de distillation à la vapeur d'eau, et d'élimination de l'eau.